# FASCICULE DE BREVET EUROPEEN

(11) **EP 0 585 513 B1**
(45) Date de publication et mention de la délivrance du brevet: **23.07.1997**
(21) Numéro de dépôt: 92870140.8
(22) Date de dépôt: 01.09.1992
(51) Int. Cl.: G05B 19/04, G07C 9/00, G04G 15/00

(54) **Système de contrôle de processus avec table de simultanéités**
Verfahrenssteuerungssystem mit Simultaneitätstabelle
System for controlling a process which contains a simultaneity table

(43) Date de publication de la demande: 09.03.1994
(73) Titulaire: Paternoster, Albert, B-1160 Auderghem (BE)
(72) Inventeur: Paternoster, Albert, B-1160 Auderghem (BE)
(74) Mandataire: Vanderperre, Robert

(56) Documents cités:
- EP-A- 0 475 866
- FR-A- 2 151 580
- FR-A- 2 583 178
- GB-A- 2 112 545
- GB-A- 2 179 475
- US-A- 4 695 739

## Description

La présente invention concerne un système de commande programmable destiné à contrôler une séquence d'opérations dans un processus quelconque.

Une application particulière du système est le contrôle d'un enchaînement d'opérations assurant automatiquement la commande de l'ouverture d'un ensemble de tiroirs-caisses.

Bien que le système objet de l'invention puisse être appliqué à d'autres ensembles et à d'autres processus, c'est dans son application à la commande de l'ouverture d'un ensemble de tiroirs-caisses que l'invention sera décrite dans ce qui suit.

Le contrôle et la protection de l'accès à des installations, par exemple un ensemble de tiroirs-caisses, constitue un problème qui s'impose avec une acuité de plus en plus grandissante pour assurer la sécurité des biens et des personnes, sinon la sécurité ou la fiabilité de processus industriels.

En ce qui concerne la protection des biens, en particulier, il existe certes des dispositifs de protection et de sécurité, parfois même sophistiqués, avec clé ou code d'accès et système d'alarme. EP-A-475866, par exemple, décrit un dispositif d'ouverture de portes comprenant un moyen de commande accessible à un opérateur et des moyens de traitement assurant la gestion des opérations d'ouverture des portes.

Dans les systèmes connus, cependant, la clé ou le code d'accès sont fixés ou programmés et la protection qu'ils assurent devient très aléatoire dès lors que des tiers non autorisés parviennent à en être détenteurs. Ces systèmes de protection sont déficients en ce qu'ils se bornent à contrôler et à rendre difficile l'accès aux personnes non autorisées.

L'objectif de l'invention est de remédier à cette déficience fondamentale des systèmes connus et de réaliser un contrôle efficace et fiable, non pas simplement de l'accès à un ensemble de tiroirs-caisses ou à un processus industriel, mais également de l'utilisation programmable de tiroirs-caisses ou du déroulement programmable des étapes d'un processus.

L'invention a également pour but de réaliser un contrôle et une commande dynamique programmable et reprogrammable en temps réel au gré de l'utilisateur sans nécessiter l'intervention d'un technicien quel qu'il soit, assurant ainsi une protection et une sécurité optimales et personnalisées.

Ces objectifs sont atteints, conformément à la présente invention, par un système de commande programmable pour la commande des opérations d'un processus contrôlé dans lequel chaque opération doit être activée dans un intervalle de temps prédéterminé, ledit système comprenant un moyen de commande accessible à un opérateur et des moyens de traitement pour gérer lesdites opérations du processus. Ce système est défini dans les revendications.

Plus particulièrement, le moyen de commande est agencé pour lancer les signaux de demandes pour toutes les opérations du processus contrôlé, et les moyens de traitement comprennent une mémoire programmable dans laquelle est chargée une table des états des opérations associée à une table des acceptations désignant les opérations qui peuvent être activées simultanément et les opérations qui doivent être déclenchées automatiquement à la suite de l'activation d'une opération quelconque.

Les moyens de traitement comprennent en outre des moyens pour consulter la table des acceptations en réponse à chaque signal de commande reçu dans un deuxième intervalle de temps prédéterminé inférieur au premier intervalle de temps précité, et générer un signal d'autorisation d'opération pour chaque opération uniquement lorsque la table des acceptations a donné un signal d'acceptation, lesdits moyens restant dans l'attente d'un nouveau signal de commande avant l'expiration du deuxième intervalle de temps prédéterminé en réponse à un signal de refus de la table des acceptations.

Les signaux d'autorisation des opérations sont ainsi générés de manière que les opérations du processus contrôlé puissent être exécutées suivant un enchaînement imposé programmé.

Dans un mode de réalisation particulier, le laps de temps prédéterminé dans lequel un signal de confirmation doit être engendré ne peut être inférieur à un laps de temps minimum.

Une horloge est prévue pour fixer et programmer, en fonction de la date ou du type de jour du calendrier, la tranche horaire durant laquelle chaque étape du processus peut être mise en activité, les signaux représentant la désignation de la tranche horaire validant les temporisations assignées à cette étape de manière à permettre la mise en activité de l'étape pendant la tranche horaire désignée seulement.

Une clé de sécurité couplée à un code secret est prévue pour introduire dans le système des temporisations prioritaires et une table d'acceptations destinées à se substituer temporairement aux paramètres résidant en mémoire de manière à valider une mise en activité d'une étape en cas d'urgence.

Le système selon l'invention est avantageusement connecté pour communiquer avec un micro-ordinateur de contrôle individuel ou commun à plusieurs systèmes, ce micro-ordinateur de contrôle pouvant être du type ordinateur individuel portable. Ce micro-ordinateur de contrôle sert à charger la mémoire avec les paramètres des enchaînements des opérations et à la recharger en temps réel au gré de l'opérateur responsable autorisé. De cette manière, le système conforme à l'invention assure une protection et une sécurité optimale personnalisée grâce à une paramétrisation individuelle programmable et reprogrammable en temps réel.

Il est possible de connecter un système conforme à l'invention directement ou via un réseau de communications à un ou plusieurs autres systèmes.

Il est bien entendu que le micro-ordinateur de contrôle peut incorporer la mémoire des paramètres et/ou le microcontrôleur de chacun des systèmes contrôlés et que le microcontrôleur peut y être implanté sous forme matérielle ou sous forme de logiciel.

L'invention trouve son application dans des domaines divers. Dans le domaine de la sécurité, il peut contrôler l'accès à des caisses et des coffres et chambres fortes, contrôler des intinéraires et cheminements, temporiser l'accès à des sites et également être appliqué à la surveillance et dans la police et la gendarmerie. Dans le domaine industriel, l'invention trouve son application dans des processus contrôlés et l'on peut citer par exemple les industries pétrolières, chimiques, pharmaceutiques et les laboratoires .

D'autres caractéristiques et avantages de l'invention apparaîtront à la lecture des dessins et de la description qui suivent.

### BREVE DESCRIPTION DES DESSINS

La figure 1 est un schéma par blocs de l'architecture générale du système selon l'invention dans une application à un ensemble de tiroirs-caisses.

La figure 2 est une représentation schématique de l'organisation logique du système.

La figure 3 représente schématiquement un panneau de commande sur la face frontale du meuble.

La figure 4 est un schéma général de l'enchaînement des opérations logiques dans le système de la figure 1.

La figure 5 est un diagramme montrant l'enchaînement des états logiques d'un tiroir.

### DESCRIPTION D'UN EXEMPLE DE MODE DE REALISATION

Dans ce qui suit, l'invention sera décrite dans son application à un ensemble de tiroirs-caisses, que l'on appellera simplement "tiroirs" dans la suite, situés dans un même meuble dénommé "caisse" et destiné à être utilisé par une seule personne qui sera appelée "opérateur".

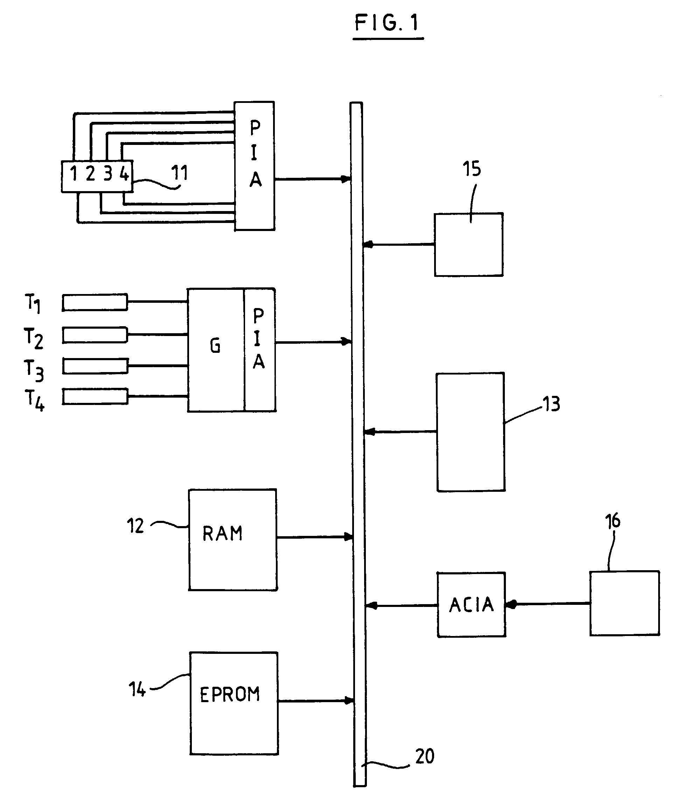

Se reportant à la figure 1, le système selon l'invention comprend essentiellement un panneau de commande 11, une mémoire RAM 12 pour être chargée avec les tables des paramètres relatifs aux contraintes imposées à l'enchaînement des opérations et les tables des états des tiroirs ainsi que les tables des routines propres aux tiroirs, un microcontrôleur 13, une mémoire programmable effaçable EPROM 14 pour contenir les routines de commande du système, une horloge temps réel 15 et un interface ACIA pour réaliser la communication avec un micro-ordinateur de contrôle 16, du type micro-ordinateur individuel.

Le mode de réalisation décrit à titre d'exemple comprend quatre tiroirs désignés T₁, T₂, T₃, T₄ respectivement. A ces tiroirs sont associés les gâches à commande électrique représentés globalement par le bloc G. L'échange des signaux de données et de commande se fait, ainsi qu'il est connu, par l'intermédiaire d'interfaces tels que PIA et ACIA et d'un bus de communication 20.

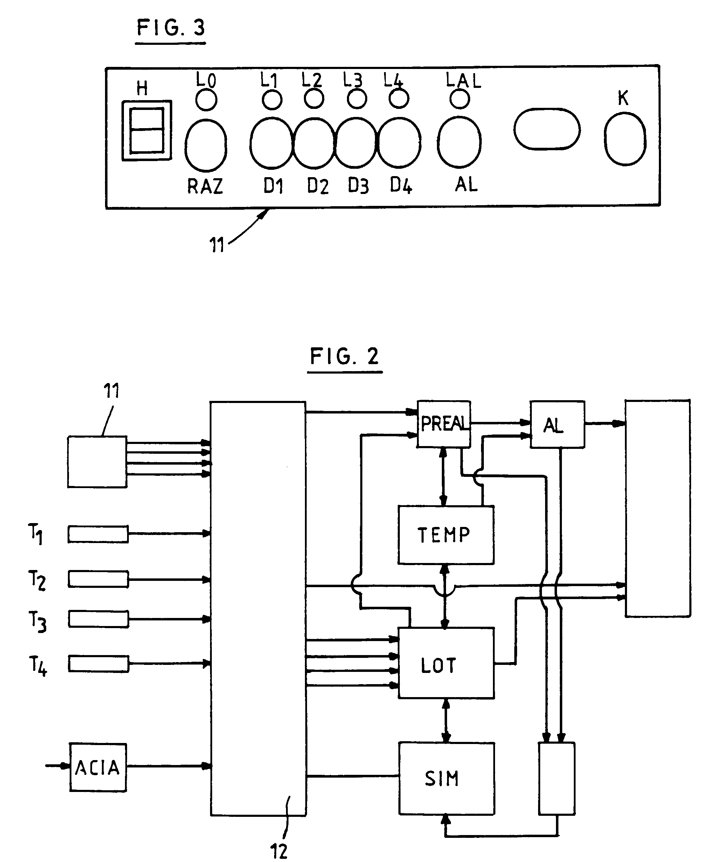

L'organisation logique du système est représentée schématiquement à la figure 2. Avant d'exposer le fonctionnement logique, on décrira brièvement la fonction de chaque bloc fonctionnel.

Le panneau de commande est disposé sur le petit tiroir que l'opérateur peut ouvrir dès lors qu'il dispose de la clé. Dans le mode de réalisation montré à la figure 2, il présente un afficheur de la tranche horaire d'utilisation H (voir plus loin), un bouton d'annulation des demandes RAZ, des boutons de demande d'ouverture des tiroirs D1 à D4 avec les lampes-témoins associées, un bouton d'alarme AL, une serrure K pour une clé de sécurité et un connecteur RS232 pour une connexion extérieure.

Les paramètres du système sont chargés en mémoire, par exemple dans la mémoire à accès sélectif RAM 12. Ces paramètres se trouvent réunis dans différentes tables.

Une table des états des tiroirs LOT comprend trois variables D, C et A pour chaque tiroir : D est à l'état 1 si le tiroir a fait l'objet d'une demande d'ouverture, C est à l'état 1 si la demande a été confirmée et acceptée, et A est à l'état 1 si le tiroir est ouvert. Quand l'une des trois variables est à 1, les autres variables pour ce tiroir sont automatiquement à O. Une table des acceptations, dont le contenu est redondant au moins pour partie avec la table des états, peut également être prévue.

Une table des simultanéités SIM spécifie quels tiroirs peuvent être actifs en même temps.

Une table des activations automatiques des tiroirs contient les numéros des autres tiroirs que la fermeture d'un tiroir donné doit ouvrir sucessivement sans demande mais avec confirmation.

On peut également mentionner une simple table des routines ou table des réactivations automatiques dont le rôle est semblable à la précédente sauf qu'elle se rapporte au tiroir dont la fermeture vient d'être détectée. Cette réactivation reste au niveau de la routine propre au tiroir considéré. Il faut prévoir que cette réactivation automatique puisse se faire avec d'autres temporisations que celles de l'ouverture qui vient de se terminer, temporisations qui sont mémorisées avec la table. On doit par exemple pouvoir réouvrir le tiroir en n'appuyant qu'une seule fois sur le bouton de demande d'ouverture, c'est-à-dire sans confirmer. On peut prévoir un certain nombre de réactivations du même tiroir. Si on ne procède pas par réactivation automatique, il faut attendre que le tiroir ait été fermé avant d'opérer une nouvelle demande sur ce même tiroir.

Une table de temporisations TEMP contient les valeurs des temporisations assignées aux différentes étapes du processus contrôlé. Ces valeurs ne peuvent être modifiées que par le gestionnaire du système à partir du micro-ordinateur de contrôle 16. Les paramètres de temporisation comprennent par exemple :
t₁ est le temps minimum à attendre entre la demande et sa confirmation;
t₂ est le temps dont on dispose pour confirmer, ce délai commence à courir quant t₁ est écoulé;
t₃ est le temps de rémanence, c'est-à-dire le temps dont on dispose pour tirer sur le tiroir, calculé à partir du moment où la confirmation de la demande a eu lieu et a été acceptée;
t₄ est le temps d'ouverture maximal, calculé à partir du moment où le tiroir a été ouvert.

Les paramètres t₁ et t₂ représentent respectivement la durée minimale que l'opérateur doit attendre avant de confirmer sa demande et le temps dont il dispose pour confirmer. Si leurs valeurs sont nulles, on considère que les opérations demande et confirmation à réaliser par l'opérateur se résumeront à une seule. Les paramètres t₃ et t₄ ne peuvent être annulés car le premier est le temps dont dispose l'opérateur pour réagir et ouvrir le tiroir et le deuxième est le temps d'ouverture maximal du tiroir.

Sont également prévus des paramètres t₅, t₆ et t₇ qui représentent respectivement les durées des première et deuxième phases de pré-alarme et de la phase d'alarme. Ces paramètres pourraient également être mis à zéro.

En mémoire sont également chargées les tranches horaires pendant lesquelles peut ou ne peut pas être ouvert ou activé chaque tiroir. Les tranches horaires s'affichent sur le panneau de commande.

La fonction du microcontrôleur 13 est de multiplexer les signaux d'entrée (signaux du panneaux de commande, signaux de détection de début et de fin d'activité (ouverture) des tiroirs et signaux d'entrée extérieurs du micro-ordinateur de contrôle) et d'exécuter les routines adéquates pour effectuer les opérations logiques qui seront décrites plus loin sous la direction des routines programmées résidant dans la mémoire EPROM 14. La liaison entre le système et le micro-ordinateur n'est pas une liaison fixe; elle peut être une liaison établie à partir d'un micro-ordinateur portable du gestionnaire. Pour que le système puisse utiliser ces nouveaux paramètres, le micro-ordinateur de contrôle commande une interruption du système, tout en laissant au système assurer le traitement de toutes les demandes en cours.

### Fonctionnement logique du système

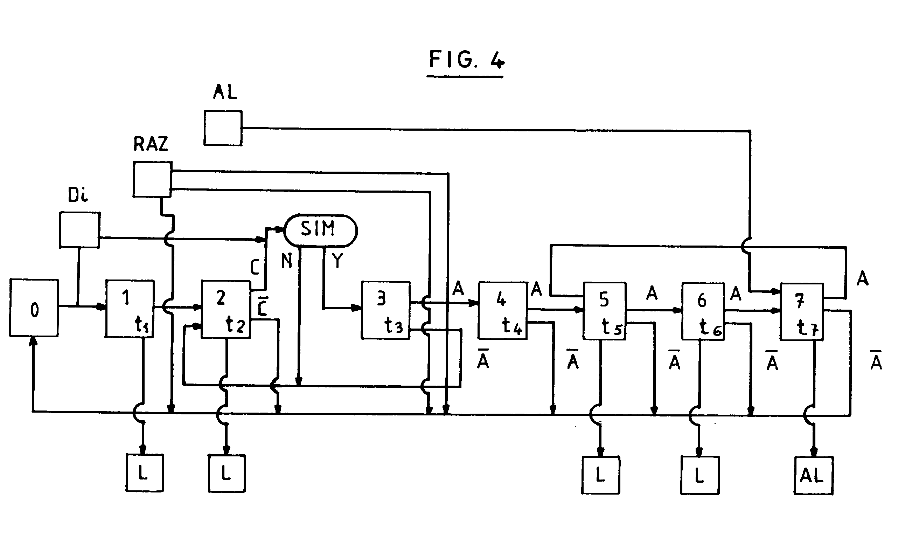

Le fonctionnement du système selon l'invention est basé, pour chaque tiroir, sur l'occurrence de trois événements, à savoir : demande d'ouverture, confirmation de la demande et ouverture. Cela amène à définir plusieurs états logiques pour chaque tiroir. Dans un mode de réalisation exemplaire il est défini huit états pour chaque tiroir. La figure 4 donne une vue globale de ces états logiques, numérotés de 0 à 7. Les états 0 à 4 sont des états normaux, respectivement repos, attente, confirmation, ouverture, activité. Les tiroirs peuvent s'y trouver indépendamment l'un de l'autre. Les états 5 à 7, respectivement première pré-alarme, deuxième pré-alarme et alarme, sont communs à tous les tiroirs, c'est-à-dire que tous les tiroirs entrent dans ces états en même temps et quittent ces états en même temps. Un tiroir est dit se trouver dans un état i, conformément à l'invention, si la temporisation ti mémorisée court, i variant de 1 à 7.

La seule interaction entre les tiroirs se fait au niveau de la table des simultanéités SIM qui fixe de quelle manière deux tiroirs peuvent se trouver simultanément dans l'état 4 (activité, tiroirs ouverts). Dans la table ci-après relative à un ensemble de quatre tiroirs, le symbole 1 au croisement d'une ligne et d'une colonne indique si deux tiroirs peuvent être ouverts en même temps etle symbole 0 indique s'ils ne le peuvent.

| Tiroirs | 1 | 2 | 3 | 4 |
|---|---|---|---|---|
| 1 | 1 | 0/1 | 0/1 | 0/1 |
| 2 | 0/1 | 1 | 0/1 | 0/1 |
| 3 | 0/1 | 0/1 | 1 | 0/1 |
| 4 | 0/1 | 0/1 | 0/1 | 1 |

Les symboles 1 sur la diagonale n'apportent aucune information.

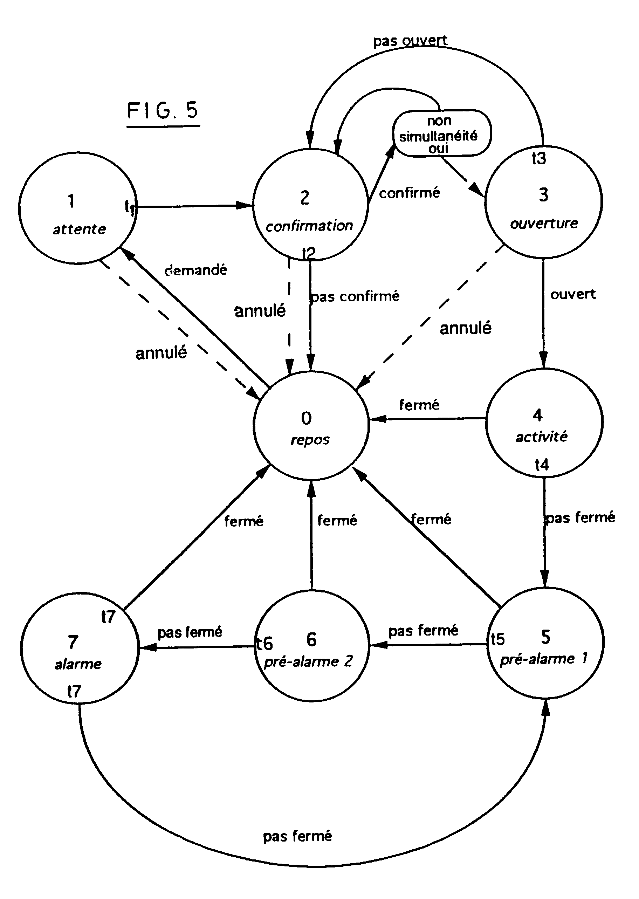

### Enchaînement de la demande, de la confirmation et de l'ouverture (Figures 4 et 5)

Un tiroir se trouve dans l'état 0 s'il est à l'état de repos : il est alors fermé, ne fait l'objet d'aucune demande ou confirmation et le système n'est ni en préalarme, ni en alarme. Lorsque l'opérateur appuie sur l'un des boutons-poussoirs de tiroir, le tiroir correspondant, appelé Tk par la suite, se trouve placé dans l'état 1 s'il était au repos initialement. Pendant l'intervalle de temps t₁, la lampe Lk est allumée.

Après écoulement du délai incompressible t₁, le tiroir Tk passe automatiquement dans l'état 2 (état de confirmation). La lampe Lk clignote et le buzzer produit un son intermittent. L'opérateur dispose de l'intervalle de temps t₂ pour confirmer sa demande en appuyant à nouveau sur le bouton-poussoir du tiroir Tk. Si la confirmation (C) est reçue avant l'expiration de l'intervalle de temps t₂, le microcontrôleur analyse si le tiroir Tk peut être ouvert en consultant la table des simultanéités SIM. S'il peut effectivement être ouvert (Y), le tiroir Tk passe dans l'état 3 (état d'ouverture), sa gâche G est alimentée pendant l'intervalle de temps t₃, qui est fixé à 7 secondes par exemple. Si le tiroir Tk est ouvert (A) avant la fin de l'intervalle de temps t₃, l'alimentation de la gâche est immédiatement coupée. Le tiroir est dit en état d'activité (état 4).

Si la table des simultanéités interdit (N) l'ouverture du tiroir Tk, celui-ci repasse dans l'état 2 (la lampe Lk clignote et le buzzer émet un son intermittent) en attente d'un signal de confirmation. Le délai t₂ est toujours compté à partir de la fin de l'intervalle de temps t₁.

Si, à l'expiration de l'intervalle de temps t₃, le tiroir Tk n'a pas été ouvert (A), il passe à l'état 2 et attend un nouveau signal de confirmation pendant l'intervalle de temps t₂ (la lampe Lk clignote à nouveau et le buzzer réémet un son intermittent) et ainsi de suite jusqu'à ce que le tiroir Tk ait été ouvert ou que l'intervalle de temps t₂ soit écoulé, celui-ci étant toujours calculé à partir de la fin de l'intervalle de temps t₁. Dans ce dernier cas, le tiroir Tk passe à l'état 0 et la demande d'ouverture est annulée. Par contre, si le tiroir Tk (A), a été ouvert pendant l'intervalle de temps t₃, il peut rester ouvert pendant l'intervalle de temps t₄ prédéterminé.

Une demande d'ouverture et/ou la confirmation d'une demande n'ont de sens que si tous les tiroirs se trouvent dans un état normal entre 0 et 4.

Il peut être possible d'ouvrir un tiroir quelconque sans devoir confirmer la demande d'ouverture en modifiant les temporisations depuis le micro-ordinateur de contrôle. Dans ce cas, le paramètre t₁ est mis à O. On dispose alors de l'intervalle de temps t₃ pour ouvrir le tiroir. Si, à l'expiration de l'intervalle de temps t₃, le tiroir n'est pas ouvert (A), l'intervalle de temps t₂ continue à courir et si la demande d'ouverture est confirmée pendant l'intervalle de temps t₂, calculé à partir du moment où la demande d'ouverture est faite, il ne peut pas encore l'être.

Plusieurs tiroirs peuvent évidemment être actifs, c'est-à-dire ouverts, en même temps en fonction des conditions fixées dans la table des simultanéités.

Il est à souligner qu'ici le premier tiroir a un rôle particulier. D'après les temporisations chargées initialement, le premier tiroir pourra être ouvert immédiatement, c'est-à-dire qu'un signal de confirmation d'ouverture n'est pas nécessaire. Si le système est dans un état normal (si tous les tiroirs sont dans des états entre 0 et 4), l'ouverture du premier tiroir sera acceptée seulement si la table des simultanéités l'autorise.

Ce premier tiroir doit pouvoir être ouvert quand le système est en pré-alarme ou en alarme (état 5 à 7) à condition que les autres tiroirs soient fermés, même si la table des simultanéités avait autorisé l'ouverture du premier tiroir et de celui ou de ceux qui sont ouverts car la table des simultanéités s'applique en fonctionnement normal.

Le fonctionnement du système est possible dans une tranche horaire donnée d'un jour donné, pour un tiroir donné. La tranche horaire actuelle apparaîtra sur l'afficheur H sous la forme du numéro de la tranche horaire. On définit par exemple huit tranches horaires au maximum sur une journée et sept types de jour différents, soit correspondant aux sept jours de la semaine, le premier jour de la semaine étant le lundi, soit déterminés au moyen d'un calendrier incorporé dans le logiciel de paramétrisation.

Lors du changement de tranche horaire, un buzzer est actionné et dès ce moment, toutes les temporisations de t₁ à t₇ de la nouvelle tranche horaire entreront en ligne de compte, la nouvelle échéance des temporisations qui courent étant calculée à partir de l'heure du changement de tranche.

Si au moment du changement de tranche horaire, certaines simultanéités d'ouverture, qui étaient autorisées, deviennent interdites alors que les tiroirs correspondants sont ouverts, l'opérateur sera prévenu par une phase de deuxième pré-alarme d'une durée de 30 secondes (avec sa sortie), suivie le cas échéant du cycle habituel alarme; pré-alarme.

### Clé de sécurité du gérant.

La serrure K de la clé de sécurité dans la position "de priorité", amène au microcontrôleur un niveau logique haut qui entraîne le remplacement des temporisations actuelles par les temporisations prioritaires du gérant. La tranche horaire qui apparaît sur l'afficheur H est numérotée 0. Ceci est signalé par un signal sonore. Une position inverse envoie un niveau logique bas, position habituelle dite "de repos". Le microcontrôleur attend que quatre boutons de tiroirs soient actionnés. Le code formé par ces quatre boutons peut être modifié à partir du micro-ordinateur de contrôle et transmis à la caisse lors de la modification des temporisations.

Si le code à 4 chiffres est correct, les temporisations de la tranche horaire en cours sont remplacées par celles de la clé de sécurité, quel que soient les états des tiroirs, y compris l'état d'alarme ou de pré-alarme. Sinon, le système attend que le gérant remette la clé en position de repos, puis en position de priorité et enfin introduise un nouveau code. L'opérateur a droit à trois essais d'entrée de code; au troisième essai se produit une alarme. Dès que la clé est retirée, toutes les temporisations sont remplacées par celle de la tranche en cours.

En appuyant sur le bouton d'annulation RAZ, les demandes et les confirmations se trouvent annulées et les gâches des tiroirs sont mises hors circuit. L'annulation ramène les tiroirs à l'état 0. Elle a seulement de l'effet lorsqu'un des tiroirs se trouve dans un de ces états.

### Alarme et pré-alarme

Si au bout de l'intervalle de temps t₄, le tiroir Tk n'a pas été fermé (A), par exemple parce que le guichetier a oublié de le refermer, le système tout entier passe en état de pré-alarme et les quatre tiroirs se trouvent placés dans l'état 5. Toute demande ou confirmation n'aura aucun effet et aucun tiroir ne pourra être ouvert. Dès que le tiroir Tk est fermé (A) et ce avant la fin de l'intervalle de temps t₅, la pré-alarme disparaît et tous les tiroirs repassent dans l'état 0.

Lorsque l'intervalle de temps t₅ est écoulé avant que tous les tiroirs n'aient été fermés (A), le système passe en deuxième phase de pré-alarme (état 6) et le buzzer produit un son continu. Lorsque tous les tiroirs sont fermés (A) avant la fin de l'intervalle de temps t₆, ils repassent tous dans l'état 0.

Dans le cas où un tiroir au moins reste ouvert à la fin de l'intervalle de temps t₆ (A), le système se met en état d'alarme, dont la durée t₇ est incompressible. Si tous les tiroirs sont fermés (A) quand l'alarme est terminée, tous les tiroirs repassent dans l'état 0 à la fin de l'intervalle de temps t₇; sinon, le système repasse par les états de première phase de pré-alarme, deuxième phase de pré-alarme et ainsi de suite tant qu'il reste au moins un tiroir ouvert.

L'alarme, qu'elle soit provoquée par une pression sur le bouton d'alarme AL ou par toute autre cause, amène tous les tiroirs à l'état 7. Elle a de l'effet quel que soit l'état des tiroirs (0 à 6). Sa durée est incompressible et non prolongeable, même par pression sur le bouton d'alarme.

Qu'un tiroir soit la cause d'une alarme ou d'une pré-alarme ou que la cause en soit autre, tous les tiroirs seront toujours dans le même état d'alarme ou de pré-alarme.

Les causes d'alarme sont, par exemple :
a) tiroir laissé ouvert trop longtemps, (durée supérieure à t₄);
b) pression sur le bouton d'alarme;
c) introduction de trois codes successifs erronés lors de la connexion du micro-ordinateur;
d) introduction de trois codes erronés formés de la combinaison de quatre boutons poussoirs de tiroirs;
e) alarme extérieure (signal logique);
f) alarme provenant d'une autre caisse (signal logique);
g) ouverture du capot arrière;
h) pince à billets qui envoie un signal logique haut lorsqu'elle ne contient plus de billets.

L'état d'alarme est automatiquement annulé au bout de sa temporisation, soit par pré-alarme lorsqu'au moins un tiroir est encore ouvert, soit par activation de la table des acceptations. Si, à un moment donné pendant la phase d'alarme, tous les tiroirs sont fermés, la phase d'alarme dure quand même pendant l'intervalle de temps t₇.

Les deux états de pré-alarme s'annulent, soit quand leur délai de temporisation est écoulé, soit avant la fin de leur délai, lorsque tous les tiroirs ouverts ont été fermés. Si tous les tiroirs sont fermés au plus tard à la fin du délai de pré-alarme en cours, la table des acceptations se trouve réactivée. Sinon, une phase d'alarme ou de deuxième pré-alarme s'en suit, respectivement après une deuxième ou une première phase de pré-alarme.

### Communications avec le micro-ordinateur

Le micro-ordinateur demande la communication avec la caisse en lui envoyant un caractère qui détermine le sens et le contenu de la transmission. Trois modes d'échange d'information, vus du micro-ordinateur, sont prévus : 1) envoi des tranches horaires; 2) réception de l'heure (c'est-à-dire de tous les paramètres lus dans l'horloge temps réel, de la dizaine d'années à la seconde ainsi que le jour de la semaine); 3) envoi de l'heure.

Toutes les communications sont basées sur un hand-shaking au niveau logiciel. Le micro-ordinateur envoie trois codes au microcontrôleur. Lorsque celui-ci reçoit trois codes erronés, il met le système en alarme et renvoie un signal vers le micro-ordinateur. Sinon, il envoie un signal qui annonce la réussite de l'opération quelle qu'elle soit.

Le rôle essentiel du micro-ordinateur de contrôle est de permettre au gestionnaire du système, le gérant de l'agence par exemple, de modifier les temporisations et éventuellement d'interdire toute action sur le système en les annulant toutes. La liaison entre le système et le micro-ordinateur est une liaison amovible. La connexion sera assurée par un port série du côté du micro-ordinateur et par un interface série ACIA, dont le niveau de sortie sera corrigé et qui sera raccordé sur les bus du microcontrôleur du système. Pour que le système puisse utiliser ces nouveaux paramètres, le micro-ordinateur commmande une interruption du système, tout en laissant au système assurer le traitement de toutes les demandes en cours.

Le système selon l'invention peut également fonctionner en mode asservi. Dans ce mode, chaque système dispose de son propre micro-ordinateur. L'opérateur lance les transactions par le clavier de son micro-ordinateur qui lui indique le tiroir qu'il doit ouvrir, le délai dont il dispose et d'autres informations qui pourraient lui être utiles. Il n'est plus nécessaire dans ce cas que chaque système soit doté d'un microcontrôleur local, celui-ci pouvant être constitué par un logiciel assurant directement l'entrée des temporisations et la commande automatique de certaines ouvertures. La mémoire peut alors être implantée dans le micro-ordinateur et le circuit d'implantation du système se résumera à un ensemble de dispositifs de commande des périphériques de sortie et d'entrée.

Dans l'environnement standard, les différentes caisses sont indépendantes. On peut prévoir qu'une sortie alarme de l'une commande la mise en alarme de l'autre. D'autres formes de communication et d'interaction entre deux systèmes possible, dès lors que les liaisons en provenance de différents systèmes soient multiplexées à l'entrée du micro-ordinateur de contrôle.

On peut aussi envisager une configuration permettant la communication directe entre systèmes, cette possibilité étant utile pour l'utilisation dans d'autres applications. Au lieu de multiplexer les sorties de communication de plusieurs systèmes sur le port RS232 du micro-ordinateur, on peut prévoir deux ports de communication sur chaque système, de manière que le système fasse partie d'un réseau. Le premier système sera raccordé au micro-ordinateur et jouera alors le rôle de serveur par rapport aux autres systèmes. On exigera une communication dans les deux sens sur toutes les connexions pour que, par exemple, un système communique une alarme déterminée que le gestionnaire du réseau analysera et transmettra éventuellement à d'autres systèmes. On peut également prévoir de communiquer au gestionnaire d'autres informations sur les systèmes.

### Contrôle de l'accès des utilisateurs au système

Chaque utilisateur pourrait disposer d'une carte magnétique, d'une carte à puce ou d'une carte à code barres pour pouvoir accéder à un meuble de tiroirs. Sur cette carte seraient stockées un certain nombre d'informations personnelles, telles que par exemple les temporisations qui lui sont propres ou l'accès à certaines fonctions qui lui sont réservées. Chaque ensemble de systèmes, montés en réseau et disposés dans un local déterminé, doit disposer d'un lecteur approprié pour contrôler l'accès de l'utilisateur extérieur. Il faudra évidemment garder la condition qui impose au circuit individuel de disposer d'un processeur pour traiter les informations parvenant du lecteur.

Le gestionnaire doit disposer du dispositif d'initialisation des cartes remises aux utilisateurs. Ce dispositif, tel qu'une embosseuse à carte magnétique, sera fourni en un seul exemplaire, afin de limiter le coût.

Les lecteurs de cartes magnétiques aussi bien que les lecteurs optiques à codes-barres peuvent disposer tous deux d'une interface de communication série. On constate encore l'utilité de deux ports série.

On pourrait envisager d'installer sur chaque meuble un clavier numérique où chaque utilisateur entrerait son code, ses paramètres propres. Certains, qui lui sont inconnus, devront alors être communiqués à son unité à partir du micro-ordinateur. Cette solution présente un degré de protection moindre que la solution par carte. Il conviendrait aussi de prévoir l'entrée de ces données par un port RS232 ou de prévoir un port supplémentaire sur le système.

D'autres dispositifs de sécurité peuvent être prévus. Par exemple, une "pince à billet" peut être prévue, qui déclenche une alarme immédiate quand les deux extrémités de la pince sont court-circuitées car plus aucun billet n'y est pincé. Plusieurs dispositifs (pince à billets, entrée directe extérieure en provenance par exemple d'un autre système, bouton-poussoir, clé de sécurité) peuvent également être prévus pour produire une alarme.

Le mode de réalisation décrit dans ce qui précède est un exemple ayant servi à mettre en lumière les aspects et avantages de l'invention. Il va de soi que l'invention n'est nullement limitée à cet exemple particulier. Ainsi qu'il a été dit plus haut, l'invention s'applique à la commande programmable des étapes successives de nombreux processus contrôlés. De plus, il sera évident pour l'homme du métier que la logique de contrôle conforme à l'invention peut être implantée dans le système de diverses manières.

## Revendications

1. Système de commande programmable pour la commande des opérations d'un processus contrôlé dans lequel chaque opération doit être activée, ledit système comprenant un moyen de commande (11) accessible à un opérateur et agencé pour lancer les signaux de demandes pour toutes les opérations du processus contrôlé et des moyens de traitement pour gérer lesdites opérations du processus,
caractérisé en ce que les moyens de traitement comprennent une mémoire programmable (12) dans laquelle est chargée une table des états des opérations (LOT) associée à une table des acceptations (SIM) désignant les opérations qui peuvent être activées simultanément et les opérations qui doivent être déclenchées automatiquement à la suite de l'activation d'une opération quelconque, et en ce que les moyens de traitement comprennent des moyens (13) pour consulter la table des acceptations (SIM) en réponse à chaque signal de confirmation (C) reçu des moyens de commande (11) dans un intervalle de temps (t2) prédéterminé, et générer un signal d'autorisation d'opération pour chaque opération uniquement lorsque la table des acceptations a donné un signal d'acceptation (Y), lesdits moyens (13) restant dans l'attente d'un nouveau signal de confirmation (C) avant l'expiration dudit intervalle de temps (t2) prédéterminé en réponse à un signal de refus (N) de la table des acceptations,
les signaux d'autorisation des opérations étant ainsi générés de manière que les opérations du processus contrôlé puissent être exécutées suivant un enchaînement imposé programmé.

2. Système suivant la revendication 1, caractérisé en ce que l'intervalle de temps précité est divisé en trois intervalles successifs : un intervalle d'attente (t1), un intervalle de confirmation (t2) durant lequel une demande d'opération doit être confirmée, et un intervalle de rémanence (t3) durant lequel une opération doit être accomplie.

3. Système suivant la revendication 1 ou 2, caractérisé en ce que les moyens de traitement sont agencés pour mettre le système dans un premier état de pré-alarme lorsque l'état d'activité d'une opération dépasse un troisième intervalle de temps (t4) prédéterminé.

4. Système suivant la revendication 3, caractérisé en ce que les moyens de traitement sont agencés pour mettre le système dans un deuxième état de pré-alarme lorsque l'état d'activité de toutes les opérations dépasse un quatrième intervalle de temps (t5) prédéterminé.

5. Système suivant l'une quelconque des revendications précédentes, caractérisé en ce que les moyens de traitement sont agencés pour mettre le système en état d'alarme lorsqu'une opération au moins est active à la fin d'un cinquième intervalle de temps (t6) prédéterminé.

6. Système suivant la revendication 5, caractérisé en ce que les moyens de traitement sont agencés pour remettre le système en état de pré-alarme lorsque ladite opération active à la fin dudit intervalle de temps (t6) est encore active à la fin d'un sixième intervalle de temps (t7) prédéterminé.

7. Système suivant l'une quelconque des revendications précédentes, caractérisé en ce qu'il comprend une horloge (15) réglable par l'utilisateur pour fixer et programmer la tranche horaire durant laquelle sont validés lesdits intervalles de temps assignés à la commande de chaque opération.

8. Système suivant l'une quelconque des revendications précédentes, caractérisé en ce que le panneau de commande (11) comprend un moyen pour introduire dans le système des temporisations prioritaires ou un code secret destinés à se substituer temporairement aux paramètres résidant en mémoire de manière à produire un signal de mise en activité d'une opération en cas d'urgence.

9. Système suivant la revendication 8, caractérisé en ce que les temporisations prioritaires sont organisées en plusieurs niveaux.

10. Système suivant l'une quelconque des revendications précédentes, caractérisé en ce qu'il comprend un micro-ordinateur de contrôle (16) connecté pour charger la mémoire avec les paramètres des enchaînements des opérations et à la recharger en temps réel.

11. Système suivant l'une quelconque des revendications précédentes, caractérisé en ce que la mémoire électronique et/ou les moyens de traitement précités sont implantés dans le micro-ordinateur de contrôle.

## Patentansprüche

1. Programmierbares Steuersystem zur Steuerung von Operationen eines gesteuerten Prozesses, bei dem jede Operation aktiviert werden muß, wobei das System eine Steuervorrichtung (11), auf die ein Computer Zugriff hat und die derart betrieben ist, daß sie die Anforderungssignale für alle Vorgänge des gesteuerten Prozesses erzeugt, und eine Verarbeitungsvorrichtung zum Leiten der Prozeßoperationen aufweist,
dadurch gekennzeichnet, daß die Verarbeitungsvorrichtung einen programmierbaren Speicher (12) aufweist, in dem eine Tabelle der Operationszustände (LOT) gespeichert ist, der eine Akzeptanztabelle (SIM) zugeordnet ist, welche die Operationen, die gleichzeitig aktiviert werden können, und die Operationen, die automatisch nach Aktivierung irgendeiner Operation auszulösen sind, bezeichnet,
sowie dadurch, daß die Verarbeitungsvorrichtung eine Einrichtung (13) aufweist, die als Reaktion auf jedes von der Steuervorrichtung (11) in einem vorbestimmten Zeitintervall (t2) empfangene Bestätigungssignal (C) die Akzeptanztabelle abfragt, und nur dann, wenn die Akzeptanztabelle ein Akzeptanzsignal (Y) gegeben hat, für jede Operation ein Operationsfreigabesignal erzeugt, wobei die Einrichtung (13) als Reaktion auf ein ablehnendes Signal (N) der Akzeptanztabelle vor Ablauf des vorbestimmten Zeitintervalls (t2) auf ein neues Bestätigungssignal (C) wartet,
wobei die Operationsfreigabesignale ebenfalls derart erzeugt werden, daß die Operationen des gesteuerten Prozesses nach einer programmierten zugewiesenen Verknüpfung ausgeführt werden können.

2. System nach Anspruch 1, dadurch gekennzeichnet, daß das genannte Zeitintervall in drei aufeinanderfolgende Intervalle unterteilt ist: ein Warteintervall (t1), ein Bestätigungsintervall (t2), in dem eine Operationsanfrage zu bestätigen ist, und ein Restintervall (t3), in dem eine Operation auszuführen ist.

3. System nach Anspruch 1 oder 2, dadurch gekennzeichnet, daß die Verarbeitungsvorrichtung derart betrieben ist, daß sie das System in einen ersten Voralarmzustand versetzt, wenn der Aktivitätszustand einer Operation ein vorbestimmtes drittes Zeitintervall (t4) überschreitet.

4. System nach Anspruch 3, dadurch gekennzeichnet, daß die Verarbeitungsvorrichtung derart betrieben ist, daß sie das System in einen zweiten Voralarmzustand versetzt, wenn der Aktivitätszustand aller Operationen ein vorbestimmtes viertes Zeitintervall (t5) überschreitet.

5. System nach einem der vorhergehenden Ansprüche, dadurch gekennzeichnet, daß die Verarbeitungsvorrichtung derart betrieben ist, daß sie das System in einen Alarmzustand versetzt, wenn am Ende eines vorbestimmten fünften Zeitintervalls (t6) wenigstens eine Operation aktiv ist.

6. System nach Anspruch 5, dadurch gekennzeichnet, daß die Verarbeitungsvorrichtung derart betrieben ist, daß sie das System in einen Voralarmzustand versetzt, wenn die aktive Operation am Ende des Zeitintervalls (t6) am Ende eines vorbestimmten sechsten Zeitintervalls (t7) noch aktiv ist.

7. System nach einem der vorhergehenden Ansprüche, dadurch gekennzeichnet, daß es einen vom Benutzer steuerbaren Zeitgeber (15) aufweist, um den Zeitabschnitt festzulegen und zu programmieren, während dessen die der Steuerung jeder Operation zugewiesenen Zeitintervalle für gültig erklärt werden.

8. System nach einem der vorhergehenden Ansprüche, dadurch gekennzeichnet, daß das Steuerpanel (11) eine Vorrichtung aufweist, um in das System prioritäre Verzögerungen oder einen Geheimcode einzugeben, die dazu bestimmt sind, sich vorübergehend über die speicherresidenten Parameter zu schreiben, derart, daß ein Signal zur Aktivierung einer Eiloperation erzeugt wird.

9. System nach Anspruch 8, dadurch gekennzeichnet, daß die prioritären Verzögerungen auf mehreren Ebenen organisiert sind.

10. System nach einem der vorhergehenden Ansprüche, dadurch gekennzeichnet, daß es einen Steuerungsmikrocomputer (16) aufweist, der geschaltet ist, um in den Speicher die Verknüpfungsparameter der Operationen zu speichern und in Echtzeit zu laden.

11. System nach einem der vorhergehenden Ansprüche, dadurch gekennzeichnet, daß der elektronische Speicher und/oder die Verarbeitungsvorrichtung in dem Steuerungsmikrocomputer vorgesehen sind.

## Claims

1. Programmable control system for the control of the steps of a controlled process in which each step must be activated, whereby the system comprises control means (11) actuatable by an attendant and arranged to generate application signals for all the actions of the controlled process and processing means for the management of said process actions,
characterized in that the processing means comprise a programmable store (12) in which there is stored an action status table (LOT) associated to an acceptance table (SIM) identifying the actions that may be activated simultaneously and the actions that must be started automatically in response to the activation of any action,
and in that the processing means comprise means (13) for interrogating the acceptance table (SIM) in response to a confirmation signal (C) from the control means (11) within a predetermined time interval (t2) and for generating an action authorisation signal for each action solely when the acceptance table has given an acceptance signal (Y), said means (13) waiting for a further confirmation signal (C) in response to a refusal signal (N) from the acceptance table before said time interval (t2) has expired,
whereby the action authorisation signals are generated such that the actions of the controlled process can be achieved following a prescribed programmed sequence.

2. System according to claim 1, characterized in that said time interval is subdivided into three succeeding intervals : a waiting interval (t1), a confirmation interval (t2) within which an application for action must be confirmed, and a rest interval (t3) within which an action must be performed.

3. System according to claim 1 or 2, characterized in that the processing means are adapted to place the system in a first pre-alarm status when the activity status of an action has a duration longer than a third predetermined time interval (t4).

4. System according to claim 3, characterized in that the processing means are adapted to place the system in a second pre-alarm status when the activity status of all the actions has a duration longer than a fourth predetermined time interval (t5).

5. System according to either of the preceding claims, characterized in that the processing means are adapted to place the system in an alarm status when at least one action is activated at the expiry of a fifth predetermined time interval (t6).

6. System according to claim 5, characterized in that the processing means are adapted to place the system in a pre-alarm status again when said activated action at the expiry of said time interval (t6) is still activated at the expiry of a sixth predetermined time interval (t7).

7. System according to either of the preceding claims, characterized in that it comprises a time generator (15) controllable by the user to set and program the time period within which the said time intervals assigned to the control of each action are valid.

8. System according to either of the preceding claims, characterized in that the control panel (11) includes means to enter priority timings or a secret code for being substituted temporarily to the parameters stored in said store, thereby to generate a signal for activating an emergency action.

9. System according to claim 8, characterized in that the priority timings are arranged in a plurality of levels.

10. System according to either of the preceding claims, characterized in that a control microcomputer (16) is connected to load the store with the parameters for the sequence of actions and to load it in real time.

11. System according to either of the preceding claims, characterized in that the electronic store and/or the processing means are implemented in the control microcomputer.
